**Europäisches Patentamt**

**European Patent Office**

**Office européen des brevets**

(19)

(11) Veröffentlichungsnummer: **0 121 501**
**A2**

(12) # EUROPÄISCHE PATENTANMELDUNG

(21) Anmeldenummer: **84810162.2**

(22) Anmeldetag: **03.04.84**

(51) Int. Cl.³: **B 65 G 47/29**

(30) Priorität: **05.04.83 CH 1831/83**

(43) Veröffentlichungstag der Anmeldung:
**10.10.84 Patentblatt 84/41**

(84) Benannte Vertragsstaaten:
**DE FR GB IT NL**

(71) Anmelder: **SIG Schweizerische Industrie-Gesellschaft**

**CH-8212 Neuhausen am Rheinfall(CH)**

(72) Erfinder: **Lenherr, Harald**
**Schützenstrasse 39a**
**CH-8212 Neuhausen am Rheinfall(CH)**

(72) Erfinder: **Deutschländer, Gert**
**Charlottenweg 21**
**CH-8212 Neuhausen am Rheinfall(CH)**

(74) Vertreter: **White, William et al,**
**PATENTANWALTS-BUREAU ISLER AG Postfach 6940**
**Walchestrasse 23**
**CH-8023 Zürich(CH)**

(54) **Vorrichtung zum Ordnen von Gegenständen in eine Reihe mit gleichen Abständen.**

(57) Die Abstandsteile (18), an denen die Gegenstände (G) infolge der höheren Transportgeschwindigkeit des oberen Trums (60) des Förderbandes im Vergleich zur Geschwindigkeit der Kette mit den Abstandsteilen (18) anstossen, sind zwischen einer Ausserbetriebsstellung (418) und einer Betriebsstellung (318) kippbar angeordnet. Ein jedem Abstandsteil (118, 218, 318, 418) zugeordnetes Tasterelement (130, 230, 330, 430) wird durch einen dagegen auflaufenden Gegenstand (G) ausgelöst. Mittels einer Fangnase (34) unter durch Federkraft einer Feder, die das Tasterelement (30) in Wirkstellung drängt, und einer Rastfahne (43) unter Federkraft, mit der diese gegen die Fangnase (34) gedrückt ist, wird ein erschütterungssicheres Haltern in der Ausserwirkstellung erhalten und die notwendige Auslösekraft wird auf ein Minimum reduziert. Mit der Rastfahne (43) ist eine Stützfahne (51) einstückig verbunden und mittels einer Schwenkachse (22) drehbar gelagert. Diese Stützfahne (51) dient zum Unterstützen eines mit dem Abstandsteil (18) verbundenen Stützrohres (20). Damit wird auch der Abstandsteil lageunabhängig in die Wirkstellung gekippt. Zur Auslösung genügt ein leichtes Süsswarengebäck, das auf dem oberen Trum (60) liegt.

Fig. 2

Fig. 3

0121501

SIG Schweizerische
Industrie-Gesellschaft

Vorrichtung zum Ordnen von Gegenständen in eine Reihe mit

gleichen Abständen

Die vorliegende Erfindung betrifft eine Vorrichtung zum
Ordnen von auf einem Förderband in Reihe mit willkürlichen
Abständen transportierten Gegenständen zu einer Reihe mit
gleichen Abständen gemäss dem Oberbegriff des unabhängigen
Patentanspruchs 1.

Vorrichtung zum Ordnen von Gegenständen auf einem Transportband, damit sie einen gleichmässigen Abstand voneinander
haben, werden insbesondere in der Verpackungsindustrie
benötigt, damit bei unregelmässig einlaufenden Gegenständen
keine Stauungen und dadurch Friktionsschäden an den Gegenständen entstehen können.

Aus der DE-C 1 288 509 ist eine Vorrichtung bekannt geworden, mit der die auf einem Förderband angelieferten Gegenstände geordnet werden, d.h. auf gleichmässige Abstände gebracht werden. Dazu sind an einer über dem Förderband angeordneten Förderanlage Abstandsteile angebracht, die zwischen einer Ausserwirkstellung und einer Wirkstellung verstellbar sind. In der Ausserwirkstellung können die Abstandsteile über die Gegenstände hinwegfahren, ohne diese zu berühren und in der Wirkstellung greifen sie in den Weg der Gegenstände ein. Wenn nun die Transportgeschwindigkeit des Förderbandes grösser ist, als die der Abstandsteile, so stossen die Gegenstände an den Abstandsteilen in ihrer Wirkstellung an und haben so denselben Abstand wie die Abstandsteile. Es ist natürlich wichtig, die Gegenstände zu überwachen und jedesmal, wenn ein Gegenstand an einem vorauseilenden Abstandsteil angestossen ist, den nachfolgenden Abstandsteil in die Wirkstellung zu bringen. Ausserhalb des Transportbereiches müssen alle Abstandsteile in ihre Ausserwirkstellung gebracht werden.

Um die Abstandsteile in Wirkstellung zu bringen, wird die Reibungskraft der Gegenstände auf dem Förderband benützt. Die Gegenstände müssen nämlich den jeweiligen Abstandsteil infolge ihrer höheren Geschwindigkeit in Transportrichtung stossen. Damit führt der Abstandsteil eine Schwenkbewegung aus, und dadurch wird ein Klinkenhebel gedreht und gibt eine Rastfläche am nachfolgenden Abstandsteil frei. Dieser fällt unter dem eigenen Gewicht in die Wirkstellung. Umgekehrt werden Schubstangen zur Betätigung der Klinkenhebel zusammen mit dem Klinkenhebel selbst über eine Leitschiene geführt, so dass die Abstandsteile, die Schubstange und die Klinkenhebel zum Teil durch die Schwerkraft in die Ausserwirkstellung gebracht werden.

Die Benützung der Reibungskraft zwischen Gegenständen und Förderband zum Stossen eines Hebels kann nur bei relativ schweren Gegenständen verwendet werden. Gegenstände mit geringem Gewicht, unterschiedlicher Stückgrösse oder wechselndem Gewicht können nicht in gleiche Abstände gebracht werden. Zudem führt die Benützung der Schwerkraft zu träger Umschaltung in die Wirkstellung, somit ist die Leistung der Maschine nach oben begrenzt.

Es ist deshalb eine Aufgabe der Erfindung, eine Vorrichtung zu schaffen, mit der Gegenstände mit stark unterschiedlichen Formen, Gewichten und Grössen schonend behandelt werden, wenn sie durch Abstandsteile in gleiche Abstände gebracht werden und die bei hoher Leistung betriebssicher arbeitet.

Erfindungsgemäss wird dies durch die Merkmale im kennzeichnenden Teil des unabhängigen Patentanspruchs 1 erreicht. Vorteilhafte Ausführungsformen sind in den abhängigen Patentansprüchen beschrieben.

Ein Ausführungsbeispiel wird nachfolgend anhand der Zeichnung erläutert. Es zeigen:

Fig. 1    eine Ansicht eines Gliedes der Transportkette von oben mit dem Tastelement in Wirkstellung und mit strichliert gezeichneten Strichen in Ausserwirkstellung und mit dem nachfolgenden Abstandsteil in Ausserwirkstellung,

Fig. 2    eine Ansicht desselben Gliedes wie in Fig. 1 jedoch von der Linie II-II aus, entgegen der Transportrichtung betrachtet, wobei ebenso die Wirkstellung des Tastelementes mit ausgezogenen Linien und die Ausserwirkstellung mit strichliert gezeichneten Linien dargestellt sind.

Fig. 3    eine Ansicht der Transportkette mit einem in Wirkstellung befindlichen Tastelement und mit einem Gegenstand vor der Berührung des Tastelementes,

Fig. 4    dieselbe Ansicht wie in Fig. 3 in einem späteren Zeitpunkt gerade wenn der Gegenstand das Tastelement unterläuft,

Fig. 5    dieselbe Ansicht wie in Fig. 3 zu einer späteren Zeit als in Fig. 4 im Moment des Auslösens des nachfolgenden Abstandteiles, und


Fig. 6    dieselbe Ansicht wie in Fig. 3 nach dem Auflaufen des Gegenstandes am Abstandsteil in einem Zeitpunkt, der für den nachfolgenden Gegenstand derselbe ist wie in Fig. 3 für den vorangegangenen Gegenstand.


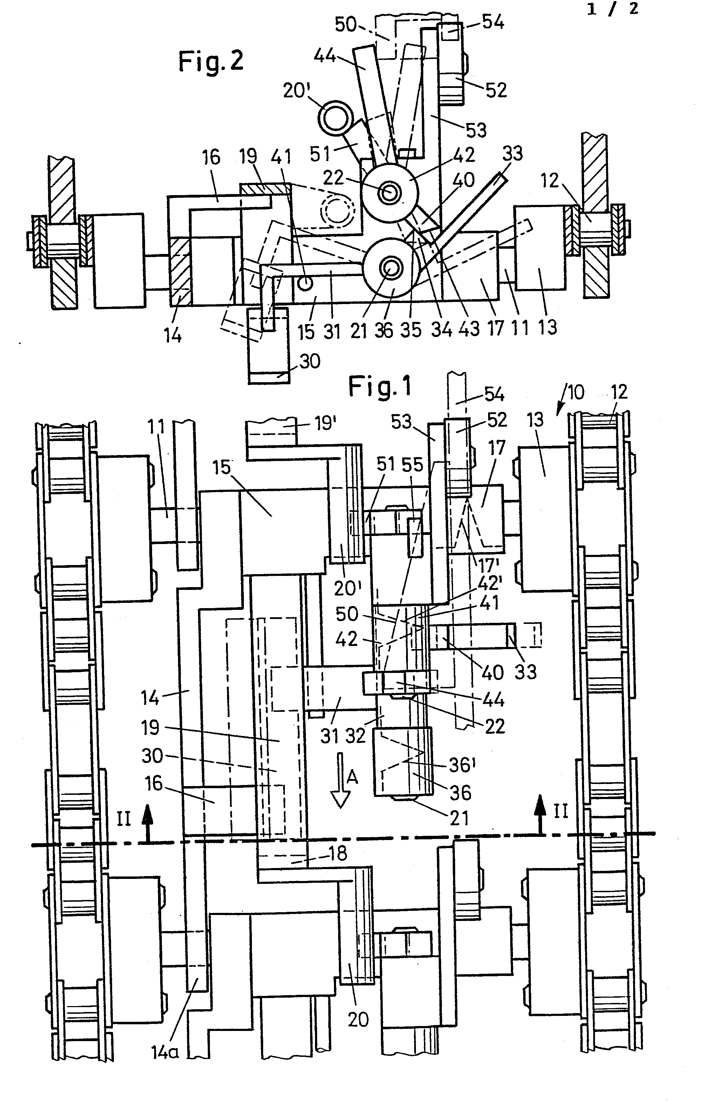

Fig. 1 und 2 lassen die mit Stangen 11 verbundenen Kettenelemente 12, 13 einer Transportkette 10 erkennen. An den
Stangen 11 sind ein Verbindungselement 14 und ein Tragelement
15 drehbar gelagert. Das Verbindungselement 14 trägt nahe an
seinem freien Ende 14a einen Stützstab 16, mit dem das unter der
Kraft einer Feder 17' in der Hülse 17 stehende Tragelemente 15
mit dem Abstandsteil 18 in Wirkstellung unterstützt ist. Der
Abstandsteil 18 ist am Tragelement 15 mit einem Träger 19
in Transportrichtung nach vorn verschoben gehaltert. An diesem
Träger 19 ist auch ein Stützrohr 20 starr befestigt, mit dem,
wie später noch zu beschreiben sein wird, der Abstandsteil 18
in Ausserwirkstellung gehalten ist.


Senkrecht zur Stange 11 und parallel zum Träger 19 sind am
Tragelement 15 zwei weitere Schwenkachsen 21 und 22 übereinander angeordnet. Während die obenliegende Schwenkachse 22 drehbar gelagert ist, dient die untenliegende Schwenkachse 21 als Lager für das Tasterelement 30. Dieses Tasterelement 30 ist mittels eines Hebelarms 31 an der Schwenkachse 21 angelenkt, so dass es einerseits unter den Träger 19 zu liegen kommt und anderseits mit einem relativ grossen Hub eine kleine Rotation der Schwenknabe 32 bewirkt. An der Schwenknabe 32 ist angenähert diagonal gegenüber dem Hebelarm 31 ein Fangstab 33 angeordnet. Dieser Fangstab 33 besitzt eine Fangnase 34 mit einer Fangkante 35. Eine Rastfahne 40, die mittels dem Schwenkgehäuse 42 mit der Schwenkachse 22 starr verbunden ist, wirkt mit der Fangkante 35 zusammen, um das Tasterelement 30 in Wirkstellung zu haltern.

Wie aus Fig. 2 deutlich erkennbar ist, bewirkt ein leichtes Anheben des Tasterelementes 30 eine Drehung der Fangnase 34, und die Fangkante gleitet unter der Rastfahne 40 im Uhrzeigersinn hinweg. Durch eine Feder 36' im Gehäuse 36 wirkt die Schwenknabe 32 im Gegenuhrzeigersinn vorgespannt und der Hebelarm 31 wird damit gegen den Stützbolzen 41 gedrängt. Eine weitere Feder 42' im Schwenkgehäuse 42 dreht dieses und die Schwenkachse 22 im Uhrzeigersinn bis die Stützfahne 51 am Stützstab 55 anliegt. Durch die Wirkung dieser weiteren Feder 42' drückt die Rastfahne 40 mit einer Gleitfläche 43 gegen die Fangkante 35 und damit wird die Kraft der Feder 36' im Gehäuse 36 überwunden und das Tasterelement 30 sprungartig hochgehoben.

Durch eine Drehung des ebenfalls mit der Schwenknabe 42 starr
verbundenen Stellarms 44 im Gegenuhrzeigersinn, also von der
in Fig. 2 mit strichlierten Linien gezeigten Stellung in die
mit ausgezogenen Linien dargestellte Stellung, gibt die
Rastfahne 40 die Fangkante 35 frei und das Tasterelement 30
wird durch die Feder im Gehäuse 36 im Gegenuhrzeigersinn,
auch wieder von der strichliert gezeigten Stellung, in die
ausgezogen gezeigte Stellung gedreht und gelangt somit in
Wirkstellung. Bei einer Transportrichtung gemäss dem Pfeil A
in Fig. 1 kann die Bewegung der Auslenkfahne 44 durch eine
Auflaufschiene 50 bewirkt werden.

Ebenfalls starr mit der Schwenkachse 22 ist eine Stützfahne
51 verbunden. Diese Stützfahne 51 dient zum Unterstellen des
Stützrohres 20, um das Abstandsteil 18 in Ausserwirkstellung
zu haltern. Damit das Stützrohr 20 hochgehoben werden kann,
ist eine Auflaufrolle 52 mittels eines Arms 53 am Tragelement 15 befestigt. Eine weitere Auflaufschiene 54 dient zum
Niederdrücken dieser Auflaufrolle 52, so dass damit das
Tragelement 15 gegenüber dem Verbindungselement 14 gedreht
wird. Wenn also zuerst das Tragelement 15 mittels der Auflaufschiene 54 und der Auflaufrolle 52 gedreht wird und
danach die Auslenkfahne 44 nach links gedrückt wird, so kann
die Stützfahne 51 das Stützrohr 20 unterfangen und Abstandsteil 18 und Tasterelement 30 befinden sich in Ausserwirkstellung.

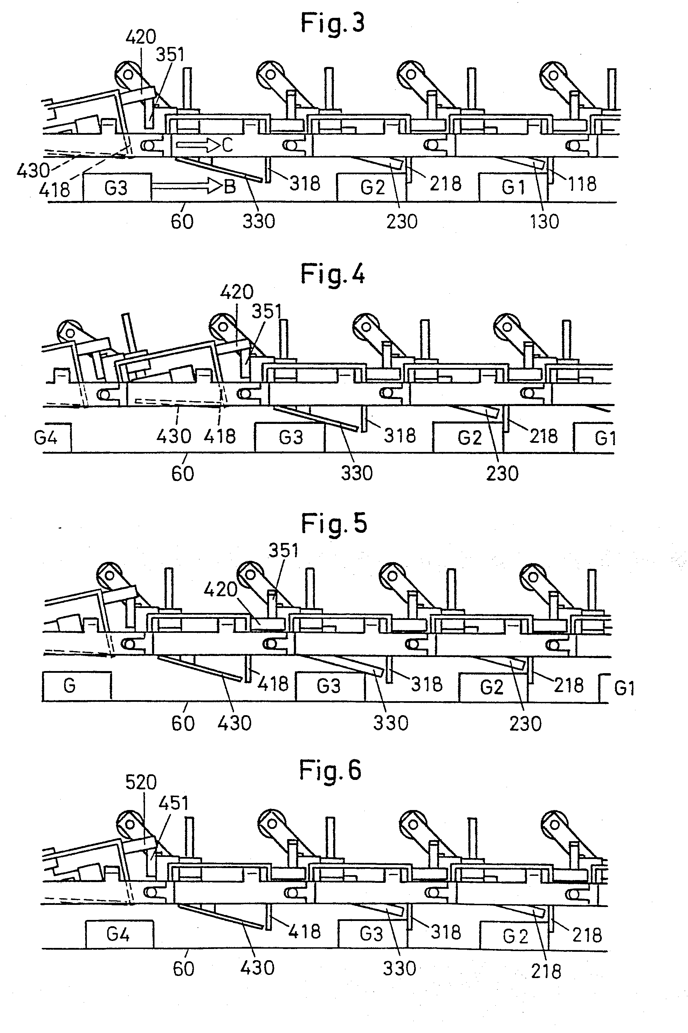

Anhand der Fig. 3 bis 6 wird nun die Wirkungsweise dieser Vorrichtung beschrieben. Aber vorerst wird noch auf die Lage des Tasterelementes 30 aufmerksam gemacht, die hier gegenüber dem oberen Trum 60 des Transportbandes einen spitzen Winkel in der Grössenordnung von 15$^o$ einschliesst. Um die einzelnen Teile der verschiedenen Anordnungen voneinander zu unterscheiden, wird vor die Bezugszahl aus Fig. 1 und 2 eine Ordnungszahl gesetzt.

Fig. 3 zeigt zwei Gegenstände G1 und G2, die an Abstandsteilen 118 und 218 anliegen. Das Förderband bewegt sich mit einer ersten Geschwindigkeit nach rechts in der Zeichnung gemäss Pfeil B und die darüber befindliche Kette bewegt sich mit einer geringeren Geschwindigkeit, die etwa halb so gross sein kann, ebenfalls nach rechts gemäss Pfeil C. Damit schliessen die Gegenstände G1, G2 sicher an die Abstandsteile 118, 218 an. Die zugehörigen Tasterelemente 130 und 230 sind in Ausserwirkstellung. Bei der nachfolgenden Anordnung sind sowohl der Abstandsteil 318 als auch das Tasterelement 330 in Wirkstellung.

Wie bei dieser nachfolgenden Anordnung deutlich erkennbar ist, unterfängt die Stützfahne 351 das Stützrohr 420. Damit ist die am linken Rand noch teilweise gezeichnete Anordnung mit dem Abstandsteil 418 und dem Tasterelement 430 in der Ausserwirkstellung.

Der mit grösserer Geschwindigkeit transportierte Gegenstand
G3 gelangt nun gemäss Fig. 4 zum Tasterelement 330 hin und
beginnt dieses anzuheben. Sobald die Fangkante 35 unter die
Rastfahne 40 gleitet (Fig. 2), wird das Tasterelement hochgeschnellt und die Stützfahne 351 gibt das Stützrohr 420 frei,
und der Abstandsteil 418 und das Tasterelement 430 gelangen
in Wirkstellung, wie Fig. 5 zeigt. Das Tasterelement 330 ist
jedoch noch nicht ganz in Ausserwirkstellung. Wie jedoch aus
Fig. 2 deutlich erkennbar ist, wird das Tasterelement 30
nicht nur angehoben, sondern gleichzeitig auch rotiert, so
dass es den Gegenstand G3 nicht beeinträchtigen kann, wenn
dieser gegen den Abstandsteil 318 transportiert wird.

Nur der Vollständigkeit halber zeigt Fig. 6 den Zustand,
wenn der Gegenstand G3 am Abstandsteil 318 angestossen ist
und nun gegenüber dem Gegenstand G2 denselben Abstand aufweist, wie dieser Gegenstand G2 zum Gegenstand G1 in Fig. 3.

Damit ist kein Stau für die Produkte notwendig, wie beispielsweise gemäss der CH-A 540 180, bevor die sich stauenden
Produkte vereinzelt werden können. Dadurch wird vermieden,
dass die Produkte aneinander reiben und sich gegenseitig
beschädigen. Durch Trennung von Abstandsteil und Tasterelement in zwei separate Hebel kann die Wirkung insbesondere des Tasterelementes auf eine breite Produktepalette ausgedehnt werden. Durch die Verwendung von Federn genügen schon geringe Kräfte, um das Auslösen zu bewirken, und die Auslösung selbst erfolgt dadurch lagenunabhängig und rasch. Durch unter Federkraft stehende Fangkanten und Rastfahnen ergibt sich eine erschütterungssichere Halterung in der Ausserwirkstellung.

P a t e n t a n s p r ü c h e

1. Vorrichtung zum Ordnen von auf einem Förderband in Reihe mit willkürlichen Abständen transportierten Gegenständen zu einer Reihe mit gleichen Abständen, mittels an je einem der auf dem Förderband bewegten Gegenstand angreifenden Abstandsteilen, die auf wenigstens einer Strecke parallel zum oberen Trum des Förderbandes mit kleinerer Geschwindigkeit aber in gleicher Richtung wie dieses bewegt sind und zwischen einer Ausserwirkstellung, in der die Gegenstände ungehindert fortbewegt werden können, und einer Wirkstellung, in der die Gegenstände an den Abstandsteilen anliegen, verstellbar sind und durch einen Auslöser von der Ausserwirkstellung in die Wirkstellung bringbar sind, dadurch gekennzeichnet, dass den in einer Transportkette angeordneten Abstandsteilen (18) noch je ein Tasterelement (30) zugeordnet ist, das bei in Wirklage befindlichen Abstandsteilen (18) in den Transportweg der Gegenstände (G) hineinragen und in eine Ausserwirkstellung verstellbar ist und dass eine Auslösevorrichtung (20, 22, 51) für den Abstandsteil (18) im nachfolgenden Glied mit dem Tasterelement (30) des vorangehenden Gliedes gekoppelt ist.

2. Vorrichtung nach Patentanspruch 1, dadurch gekennzeichnet, dass das Tasterelement (30) eine in Tansportrichtung unter einem spitzen Winkel gegen das Förderband hin geneigte Tasterfläche aufweist.

3. Vorrichtung nach Patentanspruch 2, dadurch gekennzeichnet, dass der genannte spitze Winkel zwischen $5^{\circ}$ und $30^{\circ}$ liegt.

4. Vorrichtung nach einem der Patentansprüche 1 bis 3, dadurch gekennzeichnet, dass jeder Abstandsteil (18) zwei parallele Transportflächen für die Gegenstände (G) aufweist, um die Gegenstände auf dem Transportband zu führen und bei einer Uebergabestelle zu stossen.

5. Vorrichtung nach Patentanspruch 1, dadurch gekennzeichnet, dass Abstandsteil (18) und Tasterelement (30) mittels eines gemeinsamen Tragelementes (15) an einer ersten Schwenkachse (11) gegenüber der Kette (12, 13, 14) verschwenkbar gelagert sind, dass ferner das Tasterelement (30) an einer starr mit dem Tragelement (15) verbundenen zweiten Schwenkachse (21) drehbar gehaltert ist, und dass eine die Federkraft zwischen dem Tragelement (15) und dem Tasterelement (30) zur Wirkung bringende Feder (36') vorhanden ist, um das Tasterelement (30) in die Wirkstellung zu drängen.

6. Vorrichtung nach Patentanspruch 5, dadurch gekennzeichnet, dass an den Schwenkachsen (11) benachbarter Tragelemente (15) Verbindungselemente (14) zur Bildung der Transportkette angelenkt sind und dass die Tragelemente (15) mittels Rückstellfedern (17') gegen die Verbindungselemente (14) vorgespannt sind.

7. Vorrichtung nach Patentanspruch 6, dadurch gekennzeichnet, dass mit dem Tasterelement (30) eine eine Fangkante (35) bildende Fangnase (34) starr verbunden ist, dass ferner eine dritte Schwenkachse (22) am Tragelement (15) drehbar gelagert ist, und dass diese dritte Schwenkachse (22) einerseits eine mit der genannten Fangkante (35) zusammenwirkende Rastfahne (43), ferner eine Rückstellfeder, um die Rastfahne (43) gegen die Rastkante (35) zu drängen und anderseits eine Stützfahne (51) zum Unterstützen des Abstandteils (20') des nachfolgenden Kettengliedes in Ausserwirkstellung trägt.

8. Vorrichtung nach einem der Patentansprüche 1 bis 7, dadurch gekennzeichnet, dass zum Spannen des Tastelementes (30) in der Ausserwirkstellung des Abstandteils (18) auf dem Umlaufweg der Transportkette eine erste Auflaufschiene (54) für eine an einem mit dem Tragelement (15) starr verbundenen Arm (53) angelenkte Auflaufrolle (52) zwecks Anhebung des Tragelementes (18) gegenüber den Verbindungselementen (14) angeordnet ist, und dass eine zweite Auflaufschiene (50) vorhanden ist, um einerseits eine an der dritten Schwenkachse (22) befestigte Auslenkfahne (44) zu verdrängen und damit die Rastfahne (43) über die Rastkante (35) hinwegzuheben und anderseits die Stützfahne (51) unter ein Stützrohr (20) des Tragelementes (15) zu schieben.

Fig.2

Fig.1

Fig.3

Fig.4

Fig.5

Fig.6